# EUROPEAN PATENT SPECIFICATION

(11) **EP 2 487 694 B1**
(45) Date of publication and mention of the grant of the patent: **17.12.2014**
(21) Application number: 10821800.9
(22) Date of filing: 19.08.2010
(51) Int. Cl.: H01B 17/56, C08K 5/3477, C08K 5/521, C08L 23/00, C08L 25/08, C08L 71/12, H01B 7/08, H01B 7/295, H01B 11/00, C08L 23/02, C08L 23/08, C08L 53/02

(54) **FLAME-RETARDANT RESIN SHEET AND FLAT CABLE USING SAME**
FEUERFESTE KUNSTHARZFOLIE UND FLACHKABEL DAMIT
FEUILLE DE RÉSINE IGNIFUGE ET CÂBLE PLAT UTILISANT UNE TELLE FEUILLE

(30) Priority: 06.10.2009 JP 2009232268
(43) Date of publication of application: 15.08.2012
(73) Proprietor: Sumitomo Electric Industries, Ltd., Chuo-ku Osaka-shi Osaka 541-0041 (JP)
(72) Inventor: FUKUDA, Yutaka, Osaka-shi Osaka 554-0024 (JP); HAYAMI, Hiroshi, Osaka-shi Osaka 554-0024 (JP); HOSOMIZU, Kohei, Osaka-shi Osaka 554-0024 (JP); KATSUMATA, Shigeaki, Kanuma-shi Tochigi 322-0014 (JP)
(74) Representative: Boult Wade Tennant
(86) International application number: PCT/JP2010/063962
(87) International publication number: WO 2011/043129

(56) References cited:
- WO-A2-2010/033889
- JP-A- 2002 313 146
- JP-A- 2003 082 245
- JP-A- 2003 113 318
- JP-A- 2004 071 397
- JP-A- 2004 161 929
- JP-A- 2005 268 082
- JP-A- 2006 286 318
- JP-A- 2008 198 399
- JP-A- 2009 120 680
- JP-A- 2009 301 766
- US-A1- 2004 235 993
- US-A1- 2009 088 502

## Description

### Technical Field

The present invention relates to a flame-retardant resin sheet that can be used suitably as a covering material of a flat cable, particularly as a low-dielectric-constant layer, and a flexible flat cable incorporating the sheet.

### Background Art

A multicore flexible flat cable is used as an electric wire for the wiring in an electronic device. A flat cable is produced first by arranging a plurality of conductors in parallel between two insulating films and then by unifying the assembly through the thermal fusing of the insulating films. Generally, the insulating film has an adhesive layer to be brought into contact with the conductors and a resin film at the outside of the adhesive layer. As the resin film, a biaxially oriented polyethylene terephthalate (PET) film is generally used, which has excellent mechanical and electrical properties.

A flat cable is also used as a wiring cable for high-rate transmission in an electronic device such as a liquid crystal display and a plasma display. In this case, to reduce the noise, the cable has a structure in which a shielding layer (a metal layer) is provided at the outside of the insulating layer. To achieve a high-rate transmission performance, it is necessary to set the characteristic impedance at 100 Ω, which is the same impedance as that of the IC for transmitting and receiving high-rate digital signals. It is necessary to reduce the dielectric constant of the insulating layer to control the electrostatic capacity, which is a factor of the characteristic impedance. To meet this requirement, in addition to the adhesive layer and the resin film, a low-dielectric-constant layer is used.

As the above-described flat cable, Patent Literature 1 has disclosed a flexible flat cable that is produced first by placing, at both sides of the conductors, a foamed insulating material having an adhesive layer, second by laminating the two materials, and third by providing, at the outside of each of the materials, a metal layer having a conductive adhesive layer. Because the foamed insulating material has a lower dielectric constant than that of the conventional insulating material, the electrostatic capacity can be controlled.

Patent Literature 2 has disclosed a flat cable that is composed of conductors, an insulating layer covering both sides of the conductors, a low-dielectric-constant layer provided at the outside of the insulating layer, and a shielding layer provided at the outside of the low-dielectric-constant layer. In this cable, the low-dielectric-constant layer is formed mainly of a resin composite made of polyolefin. Patent Literature 3 has disclosed a flat cable that has the same structure as that of the cable stated in Patent Literature 2 and that incorporates a low-dielectric-constant layer composed of polycarbonate, modified polyphenylene ether, polyphenylene sulfide, or the like.

### Citation List

### Patent Literature

Patent Literature 1: the published Japanese patent application Tokukai 2003-31033
Patent Literature 2: the published Japanese patent application Tokukai 2008-47505
Patent Literature 3: the published Japanese patent application Tokukai 2008-198592

### Summary of Invention

### Technical Problem

A flat cable is required to have flexibility and bending processibility. Consequently, the low-dielectric-constant layer is also required to have flexibility and bending processibility. The foamed insulating material used in the cable stated in Patent Literature 1 has low strength and therefore at the time of the bending processing, the material sometimes buckles, deteriorating the electrical property.

A flat cable is sometimes applied to the use that requires high flame retardancy. The flame retardancy is specified, for example, as the vertical-specimen flame test (VW-1 test) in the UL Standards in the U.S.A. To meet the specification of the flame retardancy, the low-dielectric-constant layer is required to contain a flame retardant. The types of flame retardants to be used include a halogen-based flame retardant, such as a bromine-based flame retardant and a chlorine-based flame retardant, and a halogen-free flame retardant, such as a phosphorus-based flame retardant and a nitrogen-based flame retardant.

The polyolefin-based resin used in the low-dielectric-constant layer stated in Patent Literature 2 is low in flame retardancy, so that it is necessary to add a large amount of flame retardant to satisfy the specification for the flame retardancy. In particular, when a halogen-free flame retardant is used, in comparison with the case where a halogen-based flame retardant is used, it is necessary to add a further increased amount of flame retardant. As a result, the flexibility of the low-dielectric-constant layer is decreased.

In addition, to achieve a desired value of the characteristic impedance of the flat cable, it is necessary to control the thickness of the low-dielectric-constant layer according to the width of the conductor, the thickness of the insulating film, the structure of the shield, and so on. In this case, it sometimes becomes necessary to decrease the thickness of the low-dielectric-constant layer, so that a low-dielectric-constant layer is desired that can be formed through the processing of thin-film extrusion. Polycarbonate and other resins used in the low-dielectric-constant layer stated in Patent Literature 3 have sufficient flame retardancy. Nevertheless, they are stiff materials, so that it is difficult to perform the processing of thin-film extrusion. As a result, a thin film cannot be obtained.

In light of the above circumstances, an object of the present invention is to offer a flame-retardant resin sheet that not only can have a low dielectric constant but also has excellent flexibility, flame retardancy, and thin-film processibility and a flat cable incorporating the sheet. The flat cable can be suitably used as a cable for high-rate transmission in particular.

### Solution to Problem

The present invention offers a flat cable according to claim 1 of the claims appended hereto.

The containing of polyphenylene ether enables not only to decrease the dielectric constant of the flame-retardant resin sheet but also to improve the flame retardancy of the sheet. The containing of polyolefin enables not only to acquire flexibility but also to improve the thin-film processibility. The containing of a thermoplastic elastomer enables not only to increase the flexibility and extrusion processibility but also to increase the compatibility between the foregoing polyphenylene ether and polyolefin, thereby improving the mechanical property. Furthermore, the use of a phosphorus-based flame retardant or a nitrogen-based flame retardant can improve the flame retardancy. Consequently, this flame-retardant resin sheet can be suitably used as a low-dielectric-constant layer of a flat cable for high-rate transmission.

It is desirable that the above-described polyolefin be at least one member selected from the group consisting of an ethylene-ethylacrylate copolymer, an ethylene-vinylacetate copolymer, acid-modified polyethylene, acid-modified polypropylene, an ionomer, and an ethylene-methacrylic acid copolymer (the second invention). These resins have excellent flexibility.

It is desirable that the above-described thermoplastic elastomer be a styrene-based thermoplastic elastomer (the third invention). A styrene-based thermoplastic elastomer is excellent in flexibility and extrusion processibility.

It is desirable that the above-described flame-retardant resin sheet have a tensile elastic modulus of 10 Mpa or more and 300 Mpa or less at 25°C (the fourth invention). When the tensile elastic modulus is more than 300 Mpa, the flexibility is decreased. When the tensile elastic modulus is less than 10 Mpa, the mechanical strength is decreased. The tensile elastic modulus can be obtained first by conducting a tensile test with a strip-shaped specimen and then by using the obtained stress-strain curve.

It is desirable that the flame-retardant resin sheet have a thickness of 0.2 mm or less (the fifth invention). The decreasing of the thickness can increase the flexibility of, for example, a flat cable incorporating the flame-retardant resin sheet. The present invention enables the extrusion of such a thin film by using the above-described resin constituent.

In the flat cable of the present invention, the first insulating layer may be composed of a plurality of layers, such as an adhesive layer and a film layer. This flat cable not only has excellent flame retardancy and flexibility but also enables to adjust the characteristic impedance to a desired value. Consequently, the flat cable can be suitably used as a cable for high-rate transmission

### Advantageous Effects of Invention

The present invention enables the production of a flat cable comprising a flame-retardant resin sheet that not only can have a low dielectric constant but also has excellent flexibility, flame retardancy, and thin-film processibitity

### Brief Description of Drawings

Figure 1 is a diagram showing the flat cable of the present invention.
Figure 2 is a diagram showing the flat cable of the present invention by using the A-A' cross section in Fig. 1.

### Description of Embodiments

First, an explanation is given to the various materials for forming the flame-retardant resin sheet of the present invention. Polyphenylene ether is an engineering plastic obtained by oxidation-polymerizing 2,6-xylenol synthesized by using methanol and phenol as the material. To improve the forming processibility of polyphenylene ether, various materials produced by fusion-blending polystyrene into polyphenylene ether are available in the market as modified polyphenylene ether. As the polyphenylene ether-based resin to be employed in the present invention, the present invention allows the use of both the above-described polyphenylene ether by itself and polyphenylene ether into which polystyrene is fusion-blended. In addition, polyphenylene ether into which carboxylic acid such as maleic acid anhydride is introduced may also be used by blending as appropriate.

As the thermoplastic elastomer, the present invention allows the use of a styrene-based elastomer, polyester elastomer, polyurethane elastomer, olefin-based elastomer, and so on. Of these elastomers, it is desirable to use a styrene-based elastomer because it can increase the compatibility between polyphenylene ether and polyolefin and improve the mechanical property and extrusion processibility. The types of styrene-based elastomer include a styrene-ethylenebutene-styrene copolymer, styrene-ethylenepropylene-styrene copolymer, styrene-ethylene-ethylenepropylene-styrene copolymer, and styrene-butylene-styrene copolymer. Hydrogenated polymers and partially hydrogenated polymers of these copolymers can be shown as examples. Furthermore, a thermoplastic elastomer into which carboxylic acid such as maleic acid anhydride is introduced may also be used by blending as appropriate.

The types of polyolefin to be used in the present invention include, for example, polyethylene, ultralow-density polyethylene, polypropylene, an ethylene-ethylacrylate copolymer, an ethylene-vinylacetate copolymer, acid-modified polyethylene, acid-modified polypropylene, an ionomer, and an ethylene-methacrylic acid copolymer. Of these, it is desirable to use an ethylene-ethylacrylate copolymer, an ethylene-vinylacetate copolymer, acid-modified polyethylene, acid-modified polypropylene, an ionomer, and an ethylene-methacrylic acid copolymer because they have excellent flexibility.

The following three constituents are mixed: polyphenylene ether at 5 mass % or more and 75 mass % or less of the entire resin constituent, a thermoplastic elastomer at 5 mass % or more and 40 mass % or less of the entire resin constituent, and polyolefin at 20 mass % or more and 90 mass % or less of the entire resin constituent. When the amount of polyphenylene ether is less than the above-described amount, the flame retardancy of the flame-retardant resin sheet decreases. When the amount of thermoplastic elastomer is less than the above-described amount, the flexibility of the flame-retardant resin sheet decreases. When the amount of polyolefin is less than the above-described amount, the extrusion processibility decreases, rendering the obtaining of a thin sheet difficult.

The types of nitrogen-based flame retardant to be used in the present invention include, for example, melamine resin, melamine cyanurate, triazine, isocyanurate, urea, and guanidine. A nitrogen-based flame retardant does not produce a toxic gas such as hydrogen halogenide even when it is disposed of by incineration after use; hence the environmental load can be reduced. The use of melamine cyanurate as the nitrogen-based flame retardant is desirable in terms of the thermal stability at the time of the mixing and the effect of improving the flame retardancy. Melamine cyanurate can also be used after being surface-treated with a silane coupling agent or a titanate-based coupling agent.

The types of phosphorus-based flame retardant to be used in the present invention include, for example, cyclic organic phosphorous compounds such as 9,10-di-hydro-9-oxa-10-phosphaphenanthrene-10-oxide, phosphoric esters such as triphenyl phosphate and bisphenol-A bis(diphenyl) phosphate, ammonium polyphosphate, aluminum polyphosphate, and aluminum hypophosphite. In view of the purport of the present invention, it is desirable to use a phosphorus-based flame retardant, which is halogen-free.

The present invention specifies that the total content of the above-described nitrogen-based flame retardant and phosphorus-based flame retardant is 5 to 100 mass parts per 100 mass parts of the resin constituent. The reason is that when the content is less than 5 mass parts, the flame retardancy becomes insufficient and when the content is more than 100 mass parts, the mechanical property and extrusion processibility are decreased. The nitrogen-based flame retardant and phosphorus-based flame retardant may be used singly or in combination.

The flame-retardant resin sheet may be formed by mixing into it an antioxidant, deterioration inhibitor, lubricant, processing stabilizer, coloring agent, heavy-metal inactivator, blowing agent, multifunctional monomer, and so on as required. After mixing these materials into the principal materials of the flame-retardant resin sheet by using a known melt mixer such as a short-screw extrusion-type mixer, pressure kneading machine, or Banbury mixer, the flame-retardant resin sheet is produced through a method such as extrusion processing.

The thickness of the flame-retardant resin sheet can be selected as appropriate according to the purpose of the use. As described below, as the flame-retardant resin sheet is used as a low-dielectric-constant layer of a flat cable, in order to obtain a desired value of characteristic impedance, a necessary thickness is determined in accordance with the shield structure, the width of the conductor, the thickness of the insulating film, and so on. When the thickness of the flame-retardant resin sheet is decreased, the flexibility of the flat cable can be increased. Because the flame-retardant resin sheet of the flat cable of the present invention has excellent extrusion processibility, its thickness can be matched with various designs. In particular, even when the thickness is as thin as 0.2 mm or less, the extrusion processing can be performed.

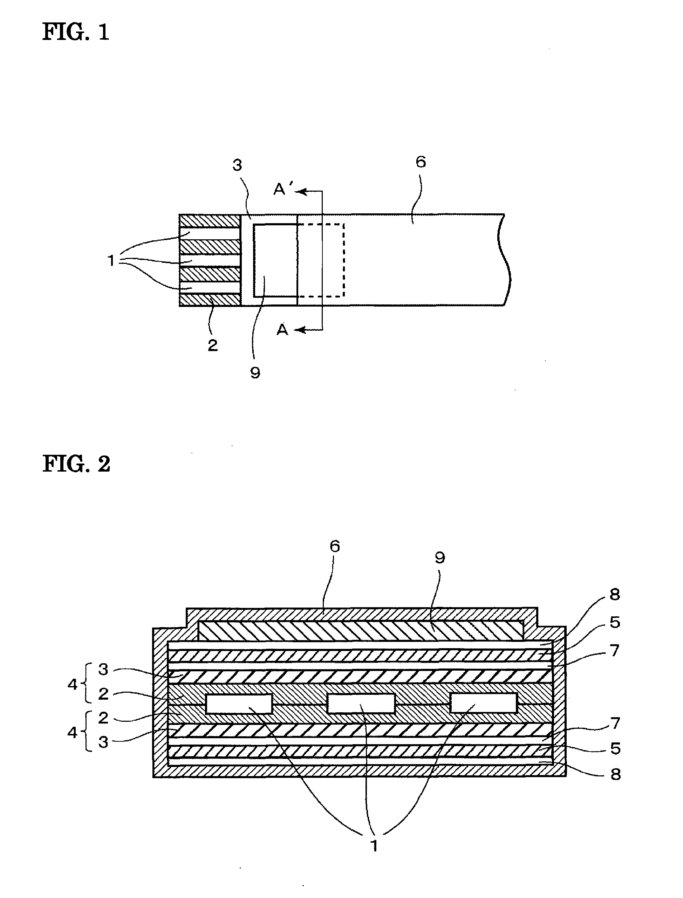

Next, an explanation is given to the flat cable of the present invention. Figure 1 is a diagram showing an example of a flat cable incorporating the flame-retardant resin sheet of the present invention. Figure 2 is a diagram showing the A-A' cross section in Fig. 1. As shown in Fig. 2, both sides of rectangular conductors 1 are covered with a first insulating layer 4, which has an adhesive layer 2 and a resin film 3. At the outside of the first insulating layer 4, a second insulating layer 5 is provided. The second insulating layer 5 is provided to adjust the characteristic impedance of the flexible flat cable. In this embodiment, a self-adhesive layer 7 is provided between the first insulating layer 4 (the resin film 3) and the second insulating layer 5 to bond the two layers.

Furthermore, a shielding layer 6 is provided at the outer region of the flat cable. At the end portion of the flat cable, a conductive layer 9 is provided at the inside of the shielding layer 6. The shielding layer 6 is electrically connected with the conductive layer 9, and the conductive layer 9 is connected to a ground wire through a connector. An easily adhering layer 8 is provided between the shielding layer 6 and the second insulating layer 5 to increase the bonding strength between the two layers. The shielding layer 6 is provided to reduce the electromagnetic interference and noise. As shown in Fig. 1, at the end portion of the flat cable, in order to allow the conductors 1 to be connected with connecting terminals provided in an electronic device, a structure is employed in which the first insulating layer 4 is provided only at one side so that the conductors 1 can be exposed.

The flame-retardant resin sheet can also be used as another layer forming the flat cable. For example, the sheet can be used as the resin film 3. In the case of a flat cable where no bonding strength is required with the conductors, the flame-retardant resin sheet can be used in place of the adhesive layer 2. In this case, the first insulating layer is formed by laminating the flame-retardant resin sheet and the resin film 3.

The conductor 1 can be formed by using a conductive metal such as copper, tin-plated annealed copper, and nickel-plated annealed copper. It is desirable that the conductor have a rectangular shape. Its thickness depends on the amount of current to be employed. In view of the flexibility of the flat cable, it is desirable that the thickness be 15 to 50 µm.

As the adhesive layer 2, polyester-based resin, polyolefin-based resin, or the like can be used singly or by mixing with a flame retardant or the like. It is desirable that the adhesive layer have a thickness of 20 to 50 µm.

The resin film 3 is formed by using a resin material having excellent flexibility. The types of resin include, for example, polyester, polyphenylene sulfide, and polyimide. The types of polyester include polyethylene terephthalate, polybuthylene terephthalate, polyethylene naphthalate, polybuthylene naphthalate, polytrimethylene terephthalate, polytrimethylene naphthalate, poly(cyclohexane dimethyl terephthalate), and poly(cyclohexane dimethyl naphthalate) polyarylate. Of these resins, polyethylene terephthalate is suitably used as the resin film in terms of electrical property, mechanical property, cost, and so on. It is desirable that the resin film have a thickness of 12 to 50 µm.

The shielding layer 6 can be formed by using a shielding film produced first by vapor-depositing metal such as silver on a resin film made of polyethylene terephthalate, polyimide, polyphenylene sulfide, or the like and then by providing a conductive adhesive layer on the metal-deposited surface.

The adhesive layer 7 can be formed by using acrylic resin, natural rubber, polyisoprene rubber, nitrile rubber, styrene-butadiene rubber, butyl rubber, polyvinyl acetate, polymethacrylate, polyvinylbutyral, epoxy resin, silicone resin, or the like. The adhesive layer has a thickness of 5 to 60 µm.

The easily adhering layer 8 can be formed by using urethane resin, polyvinyl acetate, acrylic resin, an ethylene-vinylacetate copolymer, polymethylmethacrylate, resin having rubber elasticity, or the like. The easily adhering layer has a thickness of 0.1 to 5 µm.

The conductive layer 9 can be formed by using copper, tin-plated annealed copper, nickel-plated annealed copper, or the like.

The flat cable is produced through the method described below. First, a pair of the first insulating layers 4 are placed such that the multiple conductors 1 are sandwiched between the two layers. In this case, the resin film 3 is placed at the outer side. A heating-and-pressing treatment is performed by using a known thermal laminator or hot-pressing device to implement the bonding between the conductor 1 and the adhesive layer 2 and between the adhesive layers 2. For this operation, at the end portion of the flat cable, a hole is provided at a part of the first insulating layer 4 to expose the end portion of the conductors 1. A continuous operation of the thermal lamination or hot pressing can produce a long flat cable. Subsequently, the cable is cut at a desired length.

Subsequently, the second insulating layer 5 is placed at the outside of the first insulating layer 4 through the self-adhesive layer 7. The conductive layer is provided at the outside of a second insulating layer. The entire periphery is covered with a shielding tape (the shielding layer) to complete the production of a flat cable having a shielding layer.

### Example

The present invention is explained below based on Examples and Comparative examples. It is to be considered that Examples do not limit the scope of the present invention.

### Examples and Comparative examples

### Production of the flame-retardant resin sheet

The constituents were melt-mixed with the formula shown in Table I by using a biaxial mixer. The mixture was melt-extruded in the shape of strands. The molten strands were cooled and cut to produce pellets. The pellets were extruded in the shape of a sheet by using a T-die extruder. Thus, a sheet having a thickness of 150 µm was produced.

### Measurement of the modulus of elasticity of the flame-retardant resin sheet

The obtained sheet was cut at a width of 10 mm. The modulus of elasticity was measured by conducting a tensile test based on JIS K 7127 at a pulling speed of 10 mm/min and a chuck-to-chuck distance of 100 mm.

### Measurement of the dielectric constant of the flame-retardant resin sheet

The dielectric constant of the obtained sheet was measured by using a dielectric-constant-measuring instrument (made by Hewlett-Packard Japan, Ltd., trade name: 4276A LCZ meter).

### Production of the flat cable

Fifty conductors, which were formed of tin-plated annealed copper foils (thickness: 35 µm, width: 0.3 mm), were arranged in parallel at a pitch of 0.5 mm. An insulating film (for the first insulating layer) was formed by applying a polyester-based adhesive (thickness: 30 µm) onto a polyethylene terephthalate film (thickness: 12 µm). The conductors were sandwiched between two insulating films described above. A heating-and-pressing treatment was conducted by using a thermal laminator heated at 130°C to cover both sides of the conductors with the insulating film. Then, the assembly was cut at a desired length.

An easily bonding layer having a thickness of 3 µm was formed by applying a two-part curing urethane resin (made by Toyo Ink Mfg. Co., Ltd., principal material: EL510, hardener: CAT-RT810) onto one side of the flame-retardant resin sheet. A self-adhesive layer having a thickness of 20 µm was formed by applying an acrylic self-adhesive (made by Soken Chemical & Engineering Co., Ltd., SK-Dyne 1201) onto the other side of the sheet. The flame-retardant resin sheet was stuck to the foregoing flat cable such that the self-adhesive layer was brought into contact with the resin film. A shielding tape was prepared that was produced first by vapor-depositing silver onto a polyethylene terephthalate film having a thickness of 9 µm and then by applying a conductive adhesive onto the silver-deposited surface with an applied thickness of 20 µm. The shielding tape was wrapped around the outside of the assembly. The entire body was unified by pressing it for five seconds at 100°C. The flame-retardant resin sheet was provided at both sides of the insulating film in Examples 1 and 4 and at one side of the insulating film in Examples 2, 3, 5, 6, and 7.

### Evaluation of the flame retardancy

The produced flat cables were subjected to the vertical-specimen flame test stipulated by VW-1 in the UL Standard 1581. More specifically, 10 flat cables were prepared for each group. Then, a group was judged to be unsatisfactory when after the ignition, at least one of 10 flat cables was burned, when a piece of absorbent cotton placed under the flat cable was burned by a fallen object on fire, or when a piece of kraft paper attached at the upper portion of the flat cable was burned. The other groups were judged to be satisfactory. The results of the above-described evaluations are shown in Table I.

**Table I.**

| | | Example 1 | Example 2 | Example 3 | Example 4 | Example 5 | Example 6 | Example 7 | Comparative example 1 | Comparative example 2 |
|---|---|---|---|---|---|---|---|---|---|---|
| Formula of | PPE(1) | 50 | 20 | | | | | | 50 | 20 |
| flame-retardant resin sheet | PPE(2) | | | 30 | 50 | | | | | |
| | PPE(3) | | | | | 40 | 40 | 50 | | |
| | TPE(4) | 20 | 20 | | | | | | 50 | 20 |
| | TPE(5) | | | 20 | 20 | 40 | 40 | 20 | | |
| | PO(6) | 30 | 60 | | | | | | | 60 |
| | PO(7) | | | 50 | 30 | | | | | |
| | PO(8) | | | | | 20 | | | | |
| | PO(9) | | | | | | 20 | | | |
| | PO(10) | | | | | | | 30 | | |
| | Flame retardant (11) | 20 | 30 | 20 | | 20 | 20 | 20 | 20 | |
| | Flame retardant (12) | | 30 | 20 | 30 | 20 | 20 | 20 | | |
| Evaluation result | Thin-film processibility | ○ | ○ | ○ | ○ | ○ | ○ | ○ | × | ○ |
| | Flame retardancy | Satisfactory | Satisfactory | Satisfactory | Satisfactory | Satisfactory | Satisfactory | Satisfactory | Satisfactory | Unsatisfactory |
| | Modulus of elasticity (Mpa) | 182 | 214 | 104 | 252 | 125 | 119 | 103 | 157 | 26 |
| | Dielectric constant | 2.8 | 3.1 | 2.9 | 2.9 | 2.9 | 2.9 | 2.8 | 2.5 | 2.9 |

| | | | | | | | | | | |
|---|---|---|---|---|---|---|---|---|---|---|
| Footnote (1) Polyphenylene ether: made by Asahi Kasei Corporation, Xyron 540Z (2) Polyphenylene ether: made by Asahi Kasei Corporation, Xyron X9108 (3) Polyphenylene ether: made by Asahi Kasei Corporation, Xyron X9102 (4) A styrene-based thermoplastic elastomer: made by Asahi Kasei Corporation, Tuftec H1041 (5) A styrene-based thermoplastic elastomer: made by JSR Corporation, Dynaron 4600P (6) An ethylene-vinylacetate copolymer (EVA): made by Du Pont-Mitsui Polychemicals Co., Ltd., Evaflex EV360 (7) An ethylene-ethylacrylate copolymer (EEA): made by Nippon Unicar Co., Ltd., NUC-6220 (8) Acid-modified polyethylene: made by Mitsui Chemicals Inc., ADMER NF548 (9) An ionomer: made by Du Pont-Mitsui Polychemicals Co., Ltd., Himilan 1705 (10) An ethylene-methacrylic acid copolymer (EMMA): made by Du Pont-Mitsui Polychemicals Co., Ltd., Nyukureru AN4213C (11) Phosphoric ester: made by Daihachi Chemical Industry Co., Ltd., PX200 (12) Melamine cyanurate: made by Nissan Chemical Industries, Ltd., MC6000 | | | | | | | | | | |

The sheets of Examples 1 to 7 were produced both by using, as the resin constituent, three constituents of polyphenylene ether, a thermoplastic elastomer, and polyolefin and by adding a flame retardant to the resin constituent. The sheets made possible to perform good extrusion of a sheet having a thickness of 150 µm and satisfied the requirement in the properties of modulus of elasticity and flame retardancy.

The formula of Comparative example 1 used, as the resin constituent, only polyphenylene ether and a thermoplastic elastomer. This formula did not make possible to perform the extrusion at a thickness of 150 µm, showing inferior thin-film processibility. The formula of Comparative example 2 added neither a phosphorus-based flame retardant nor a nitrogen-based flame retardant. This formula did not satisfy the required flame retardancy.

### Reference Signs List

1: conductor
2: adhesive layer
3: resin film
4: first insulating layer
5: second insulating layer
6: shielding layer
7: self-adhesive layer
8: easily adhering layer
9: conductive layer

## Claims

1. A flat cable, comprising:
conductors;
a first insulating layer covering both sides of the conductors;
a second insulating layer provided at the outside of at least one side of the first insulating layer; and
a shielding layer provided at the outside of the second insulating layer;
wherein the second insulating layer is formed by using the flame-retardant resin sheet comprising:
a resin constituent containing:
polyphenylene ether at a content of 5 mass % or more and 75 mass % or less;
a thermoplastic elastomer at a content of 5 mass % or more and 40 mass % or less; and
polyolefin at a content of 20 mass % or more and 90 mass % or less; and
a phosphorus-based flame retardant, a nitrogen-based flame retardant, or both at 5 to 100 mass parts per 100 mass parts of the resin constituent.

2. The flat cable as defined by claim 1, wherein the polyolefin is at least one member selected from the group consisting of an ethylene-ethylacrylate copolymer, an ethylene-vinylacetate copolymer, acid-modified polyethylene, acid-modified polypropylene, an ionomer, and an ethylene-methacrylic acid copolymer.

3. The flat cable as defined by claim 1 or 2, wherein the thermoplastic elastomer is a styrene-based thermoplastic elastomer.

4. The flat cable as defined by any one of claims 1 to 3, the flame-retardant resin sheet having a tensile elastic modulus of 10 Mpa or more and 300 Mpa or less at 25°C.

5. The flat cable as defined by any one of claims 1 to 4, the flame-retardant resin sheet having a thickness of 0.2 mm or less.

## Patentansprüche

1. Flachkabel, mit:
Leitern;
einer ersten Isolierschicht, die beide Seiten der Leiter überdeckt;
einer zweiten Isolierschicht, die außerhalb von zumindest einer Seite der ersten Isolierschicht vorgesehen ist; und
einer Abschirmschicht, die außerhalb der zweiten Isolierschicht vorgesehen ist;
wobei die zweite Isolierschicht unter Verwendung der flammhemmenden Harzschicht ausgebildet ist, die aufweist:
einen Harzbestandteil mit:
Polyphenylenether in einem Gehalt von 5 Masse-% oder mehr und 75 Masse-% oder weniger;
einem thermoplastischen Elastomer in einem Gehalt von 5 Masse-% oder mehr und 40 Masse-% oder weniger;
und Polyolefin in einem Gehalt vom 20 Masse-% oder mehr und 90 Masse-% oder weniger; und
ein Phosphor-basiertes Flammschutzmittel, ein Stickstoff-basiertes Flammschutzmittel, oder beides zu 5 bis 100 Massenanteilen pro 100 Massenanteilen des Harzbestandteils.

2. Flachkabel nach Anspruch 1, bei dem das Polyolefin zumindest ein Element ist, das ausgewählt ist aus der Gruppe, die besteht aus: einem Ethylen-Ethylacrylat-Copolymer, einem Ethylen-Vinylacetat-Copolymer, säuremodifiziertem Polyethylen, säuremodifiziertem Polypropylen, einem Ionomer, und einem Ethylen-Methacrylsäure-Copolymer.

3. Flachkabel nach Anspruch 1 oder 2, bei dem das thermoplastische Elastomer ein Styrol-basiertes thermoplastisches Elastomer ist.

4. Flachkabel nach einem der Ansprüche 1 bis 3, bei dem die flammhemmende Harzschicht bei 25°C ein Zugelastizitätsmodul von 10 Mpa oder mehr und 300 Mpa oder weniger aufweist.

5. Flachkabel nach einem der Ansprüche 1 bis 4, bei dem die flammhemmende Harzschicht eine Dicke von 0.2mm oder weniger aufweist.

## Revendications

1. Câble plat, comprenant
des conducteurs ;
une première couche isolante couvrant les deux côtés des conducteurs ;
une seconde couche isolante fournie sur l'extérieur d'au moins un côté de la première couche isolante ; et
une couche d'écran fournie sur l'extérieur de la seconde couche isolante ;
dans lequel la seconde couche isolante est formée en utilisant la feuille de résine ignifuge comprenant :
un constituant de résine contenant :
du polyphénylène éther à une teneur de 5 % en masse ou supérieure et de 75 % en masse ou inférieure ;
un élastomère thermoplastique à une teneur de 5 % en masse ou supérieure et de 40 % en masse ou inférieure ; et
une polyoléfine à une teneur de 20 % en masse ou supérieure et de 90 % en masse ou inférieure ; et
un ignifuge à base de phosphore, un ignifuge à base d'azote, ou les deux à de 5 à 100 parties en masse pour 100 parties en masse du constituant de résine.

2. Câble plat selon la revendication 1, dans lequel la polyoléfine est au moins un élément choisi dans le groupe constitué d'un copolymère d'éthylène-acrylate d'éthyle, d'un copolymère d'éthylène-acétate de vinyle, de polyéthylène acide-modifié, de polypropylène acide-modifié, d'un ionomère, et d'un copolymère d'éthylène-acide méthacrylique.

3. Câble plat selon la revendication 1 ou 2, dans lequel l'élastomère thermoplastique est un élastomère thermoplastique à base de styrène.

4. Câble plat selon l'une quelconque des revendications 1 à 3, la feuille de résine ignifuge présentant un module élastique de traction de 10 Mpa ou supérieur et de 300 Mpa ou inférieur à 25°C.

5. Câble plat selon l'une quelconque des revendications 1 à 4, la feuille de résine ignifuge présentant une épaisseur de 0,2 mm ou inférieure.
